Europäisches Patentamt

European Patent Office

Office européen des brevets

(19)

(11)  **EP 0 463 519 B1**

(12)  **EUROPÄISCHE PATENTSCHRIFT**

(45) Veröffentlichungstag und Bekanntmachung des Hinweises auf die Patenterteilung:
**04.12.1996  Patentblatt 1996/49**

(51) Int Cl.[6]: **C08F 210/02**, C08F 2/38

(21) Anmeldenummer: **91109830.9**

(22) Anmeldetag: **15.06.1991**

(54) **Verfahren zur Herstellung von Ethylen-/Vinylester-Copolymerisaten**

Process for the manufacture of copolymers of ethylene and vinyl esters

Procédé de préparation de copolymères de l'éthylène et d'esters vinyliques

(84) Benannte Vertragsstaaten:
**AT BE CH DE DK ES FR GB IT LI LU NL SE**

(30) Priorität: **29.06.1990  DE 4020639**

(43) Veröffentlichungstag der Anmeldung:
**02.01.1992  Patentblatt 1992/01**

(73) Patentinhaber: **HOECHST AKTIENGESELLSCHAFT
65926 Frankfurt am Main (DE)**

(72) Erfinder:
• **Reimann, Werner, Dr.
W-4100 Duisburg (DE)**
• **Payer, Wolfgang, Dr.
W-4320 Wesel 1 (DE)**
• **Hobes, John Victor, Dr.
W-4220 Dinslaken (DE)**

(56) Entgegenhaltungen:
DE-A- 2 102 469          FR-A- 1 394 760
GB-A- 755 167           GB-A- 760 178
US-A- 4 091 200

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft die Herstellung von Copolymerisaten aus Ethylen und Estern des Vinylalkohols durch Polymerisation der Monomeren bei Drücken von mindestens 100 MPa und Temperaturen zwischen 150 und 350°C unter Ausschluß eines Lösungs- oder Emulgiermittels, wobei durch Zusatz von Radikalfängern zum Monomerengemisch die Reaktionstemperatur und damit der Monomeren-Umsatz und die Polymerisat-Ausbeute erhöht werden.

Die Copolymerisation von Ethylen mit Estern des Vinylalkohols in Abwesenheit merkbarer Mengen eines Lösungs- oder Emulgiermittels ist bekannt. So führt man nach einem in der DE 21 02 469 CI beschriebenen Verfahren die Umsetzung der Monomeren bei Drücken bis zu 7000 atm, vorzugsweise bei 1500 bis 3000 atm durch. Die Polymerisationstemperaturen liegen zwischen 150 und 350°C, vorzugsweise zwischen 200 und 325°C. Als Polymerisationsinitiatoren setzt man Sauerstoff oder Verbindungen ein, die unter den Reaktionsbedingungen in Radikale zerfallen. Ein besonderes Merkmal dieses Verfahrens ist, daß man weitgehend unter Ausschluß von Lösungsmitteln oder Emulgiermitteln arbeitet. Dem Reaktionsgemisch werden in der Regel lediglich vernachlässigbar kleine Mengen einer inerten Flüssigkeit zugeführt, die als Lösungsmittel für die Polymerisationsinitiatoren dienen. Wenn Sauerstoff als Katalysator eingesetzt wird, benötigt man keine Lösungsmittel.

Ein Nachteil dieses bekannten Verfahrens sind die recht geringen Maximalumsätze, die bei einfachem Durchgang des Reaktionsgemisches durch die Reaktionszone erzielt werden. Bei der Copolymerisation von Ethylen und Vinylacetat in einem Rührautoklaven betragen sie nur etwa 20 %. In technischen Anlagen werden daher die nicht umgesetzten Monomeren im Kreislauf in den Reaktor zurückgeführt.

Entscheidender Faktor für die Höhe des Umsatzes ist die Differenz zwischen der Temperatur des Reaktionsgemisches am Reaktoreingang und der Polymerisationstemperatur. Mit Zunahme dieser Temperaturdifferenz steigt der Umsatz an oder - anders ausgedrückt - bei konstanter Reaktoreingangstemperatur hängt der Umsatz unmittelbar von der Polymerisationstemperatur ab.

Die Temperaturerhöhung im Polymerisationsreaktor ist jedoch Beschränkungen unterworfen. Oberhalb einer bestimmten Polymerisationstemperatur läßt sich die Reaktion nämlich nicht mehr beherrschen. Ursache hierfür ist der thermische Abbau des Polymerisats. Überdies kann bei hohen Temperaturen Ethylen spontan unter Bildung von Kohlenstoff, Wasserstoff und auch Methan zerfallen. Bei den Verfahren des Standes der Technik wird daher entgegen den angegebenen, weiten Temperaturbereichen von 150 bis 350°C, bei der Polymerisation von Ethylen in der Praxis eine obere Grenztemperatur von 300°C gewöhnlich nicht überschritten. Die Reaktionstemperatur für die Mischpolymerisation von Ethylen und Vinylestern liegt sogar deutlich niedriger und ist von den spezifischen Verhältnissen in der Polymerisationsapparatur abhängig. So beträgt die maximale Reaktionstemperatur nach den Beispielen der zitierten DE 21 02 469 CI (bei der Copolymerisation von Ethylen und Laurylacrylat) 280°C, und bei der Copolymerisation von Ethylen und Vinylacetat nur 260°C.

Es bestand daher die Aufgabe eine Arbeitsweise zu entwickeln, die es zur Erzielung höherer Umsätze und Ausbeuten erlaubt, die Polymerisation von Ethylen mit Estern des Vinylalkohols bei höheren Temperaturen auszuführen.

Diese Aufgabe wird erfindungsgemäß gelöst durch ein Verfahren zur Herstellung von Copolymerisaten des Ethylens durch Polymerisation von Ethylen mit Estern des Vinylalkohols, unter Ausschluß von Lösungs- und Emulgiermitteln bei Drücken von mindestens 100 MPa und Temperaturen zwischen 150 bis 350°C in Gegenwart Radikale bildender Katalysatoren und/oder Sauerstoff und eines Molmassenreglers. Es ist dadurch gekennzeichnet, daß die Polymerisation unter Zusatz eines Radikalfängers erfolgt.

Radikalfänger (auch Radikalinhibitoren genannt), sind als Additive für Kunststoffe bekannt (vgl. z.B. Ullmanns Encyclopädie der technischen Chemie, 4. Auflage, Bd. 15, Seite 253 ff). Ihre Aufgabe ist es, Polymerisate, unabhängig von chemischem Aufbau, Zusammensetzung und Molmasse, insbesondere gegen den Einfluß von Wärme, Licht und Sauerstoff, zu stabilisieren. Der Einsatz der Radikalfänger blieb bisher auf das fertige Polymerisat in Form des Rohmaterials, des Halbzeugs oder des Fertigprodukts beschränkt. Ihre Verwendung im Rahmen des Polymerisationsprozesses wurde bisher nicht in Betracht gezogen.

Nach der Lehre der GB 755,167 setzt man dem bei der Polymerisation von Ethylen erhaltenen Produkt Radikalfänger zu, um die Stabilität des Polymerisats zu verbessern. In der GB 760,178 ist ein Verfahren zur Homopolymerisation von Ethylen beschrieben, wobei dem Ethylen von der Kompression Radikalfänger zugesetzt werden, um durch freie Radikale ausgelöste, unkontrollierte Polymerisationen des Olefins während der Vorbehandlung (Komprimieren, Aufheizen) des Ethylens auszuschließen. Schließlich verhindert man die explosionsartige Zersetzung des bei der Copolymerisation von Ethylen mit Vinylacetat erhaltenen Produkts nach der Arbeitsweise der US 4.091,200 durch Zusatz von Radikalfängern zum Copolymerisat. Auf die Möglichkeit, die Reaktionstemperatur und damit die Polymerisatausbeute durch Zusatz von Radikalfängern während der Polymerisation zu steigern, wird in keiner der Veröffentlichungen eingegangen.

Chemisch gehören die Radikalfänger zur Gruppe der Phenole, der aromatischen Amine, der organischen Phosphite und der Thioester. Als Radikalfänger auf Phenolbasis finden einfache Phenole, Bisphenole, Thiobisphenole und Polyphenole Anwendung. Beispiele für diese Verbindungen sind Phenol, Hydrochinon, Resorcin, Brenzcatechin, o-,m-,p-Kresol, 4-Methoxyphenol, Butyl-4-methoxyphenol, 2,2-Di-tert.-butyl-4-methylphenol, n-Octodecyl-3-(3,5-di-tert.-butyl-4-hydroxyphenyl)propionat. Unter den Aminen haben vor allem p-Phenylendiamine und Diphenylamine Bedeutung erlangt. Repräsentativ sind z.B. N-(1,3-Dimethylbutyl)N'-phenyl-1,4-phenylendiamin und 4-Isopropyl-N'-phenyl-p-phenylendiamin. Phospite wirken in doppelter Funktion: sie sind selbst Radikalfänger und verstärken andere Radikalfänger insbesondere solche, die sich von Phenolen ableiten synergistisch. Anwendung finden z.B. Tridecylphosphit, Triisooctylphosphit, Triphenylphosphit, Tris(2,4-di-tert.-butylphenyl)phosphit. Thioester werden als Synergisten, gewöhnlich zusammen mit Phenolen, eingesetzt. Gebräuchliche Thioester sind Dicetylthiodipropionat, Dilaurylthiodipropionat, Distearylthiodipropionat.

Der Wirkungsmechanismus der Radikalfänger während der Polymerisation ist unbekannt. Es ist jedoch bemerkenswert, daß sie den durch Radikale initiierten Aufbau von Makromolekülen, z.B. durch Reaktion mit den katalytisch wirkenden Radikalen, nicht zum Erliegen bringen.

Im erfindungsgemäßen Prozeß können als Radikalfänger Vertreter aller vorstehend beschriebenen Verbindungsklassen allein oder aber auch in Mischung aus zwei oder mehr Einzelsubstanzen verwendet werden. Besonders geeignet sind Phenolderivate und Mischungen aus Phenolderivaten und organischen Phosphiten. Bevorzugt werden Hydrochinon, 4-Methoxyphenol, 2,6-Di-tert.-butyl-4-methylphenol oder n-Octadecyl-3-(3,5-di-tert.-butyl-4-hydroxyphenyl)propionat allein oder zusammen mit Tris(2,4-di-tert.-butylphenyl)phosphit.

Die Radikalfänger werden dem Reaktionsgemisch entweder in einem Lösungsmittel oder aber bevorzugt im Comonomeren gelöst, zugesetzt. Die angewandte Menge ist abhängig von der Art des Radikalfängers, von der Reaktionstemperatur - höhere Temperaturen erfordern im allgemeinen höhere Anteile als niedrige Temperaturen - und der Zusammensetzung des Monomerengemisches. Sie beträgt 10 bis 10.000 Gew.-ppm, bezogen auf Ethylen. Besonders bewährt hat sich der Zusatz vo-. 100 bis 5.000 Gew.-ppm Radikalfänger.

Die Radikalfänger werden im Verlauf des Prozesses nur teilweise verbraucht. Ein Teil wird zusammen mit den nichtumgesetzten Monomeren aus dem Reaktionssystem ausgeschleust oder im Kreis geführt. Ein anderer Teil wird im Polymerisat fixiert und kann als erwünschtes Additiv darin verbleiben.

Als Comonomere des Ethylens setzt man Ester des Vinylalkohols ein, die vorzugsweise insgesamt 4 bis 10 Kohlenstoffatome enthalten, beispielsweise Vinylacetat, Vinylpropionat, Vinylbutyrat und Vinylpivalat. Statt in Gegenwart nur eines Comonomeren, kann man die Polymerisation auch in Gegenwart mehrerer Comonomerer durchführen.

Die Polymerisation erfolgt bei Drücken von mindestens 100 MPa und Temperaturen zwischen 150 und 350°C. Besonders bewährt haben sich Drücke bis 700 MPa, bevorzugt arbeitet man in einem Bereich von 150 bis 300 MPa. Bewährte Reaktionstemperaturen liegen im Bereich von 260 bis 310°C, insbesondere 270 bis 300°C.

Die Polymerisationsreaktion wird durch Radikale bildende Katalysatoren und/oder durch Sauerstoff ausgelöst. Unter Radikale bildenden Katalysatoren versteht man die für die Hochdruckpolymerisation von Ethylen bekannten Polymerisationsinitiatoren, z.B. Peroxide, Hydroperoxide und Azoverbindungen. Beispiele für diese Substanzklassen sind Di-tert.Di-tert.-butylperoxid, tert.tert.-Butylperoxipivalat, Butylperoxibenzoat, tert.tert.-Butylhydroperoxid, Cumolhydroperoxid, Azo-bis-isobutyronitril. Es ist auch möglich, Gemische aus 2 oder mehreren Peroxiden, aus 2 oder mehreren Azoverbindungen oder aus Peroxiden und Sauerstoff oder Azoverbindungen und Sauerstoff einzusetzen. Die freie Radikale bildenden Katalysatoren werden in Abhängigkeit von der Reaktionstemperatur und von der Zusammensetzung des Monomerengemisches in einer Menge von 10 bis 10.000 Gew.-ppm, bezogen auf Ethylen, verwendet. Um die Katalysatoren in den Reaktionsraum einzutragen, löst man sie in einem geeigneten Lösungsmittel, insbesondere Benzol, Cyclohexan oder Isooctan. Die gleichen Flüssigkeiten eignen sich auch als Lösungsmittel für die Radikalfänger. Sauerstoff wird in Mengen von 1 bis 100 Gew.-ppm, bezogen auf Ethylen, dem Reaktionsgemisch zugesetzt.

Die Copolymerisation der Monomeren erfolgt in Gegenwart eines Polymerisationsreglers. Bewährt haben sich z. B. gesättigte oder ungesättigte Kohlenwasserstoffe, Alkohole, Aldehyde und Ketone, vorzugsweise Aldehyde und insbesondere Propionaldehyd. Aufgabe der Polymerisationsregler ist die Beeinflussung der Molmasse der Polymerisate. Durch Zusatz dieser Verbindungen in geeigneter Menge, üblich je nach Art des Reglers sind 0,05 bis 10 Gew.-%, bezogen auf Ethylen, kann die Molmasse der Polymerisate auf den gewünschten Wert eingestellt werden.

Die Copolymerisation nach dem erfindungsgemäßen Verfahren wird in den für die Polymerisation von Ethylen allein oder zusammen mit anderen Monomeren unter erhöhtem Druck und erhöhter Temperatur üblichen Vorrichtungen durchgeführt. In diesem Zusammenhang verweisen wir auf Ullmanns Encyclopädie der technischen Chemie, 4. Auflage, Band 19, Seite 169 ff (1980).

Die Polymerisation kann kontinuierlich oder auch diskontinuierlich erfolgen. Besonders bewährt hat sich die kontinuierliche Durchführung des Verfahrens in Rohrreaktoren. Bei dieser Ausführungsform leitet man eine Mischung aus Ethylen, einem oder mehreren Comonomeren, dem Polymerisationsregler und dem Radikalfänger am Reaktoreingang und gegebenenfalls an einer oder mehreren weiteren Stellen (Seitenästen) des Reaktors ein. Der Polymerisationsinitiator kann ebenfalls entweder insgesamt mit den Monomeren am Eingang, oder in Anteilen über Seitenäste in den Reaktor eingeführt werden. Die Verweilzeit des Reaktionsgemisches im Reaktor beträgt 30 bis 180 Sekunden.

Die mittlere Molmasse $\overline{M}_n$ der nach dem erfindungsgemäßen Verfahren erhaltenen Polymerisate liegt zwischen 1.000 und 5.000 g . mol$^{-1}$. Ihre Bestimmung erfolgte durch Dampfdruckosmometrie.

Die nach dem erfindungsgemäßen Verfahren erhaltenen Copolymerisate des Ethylens werden als Zusatz zu Erdöl und Erdölfraktionen, insbesondere Mitteldestillaten, zur Verbesserung der Fließfähigkeit, verwendet.

Die nachfolgenden Beispiele erläutern die Erfindung, beschränken sie jedoch nicht auf die beschriebenen Ausführungsformen.

Beispiele 1 bis 6

Zur Durchführung der in Tabelle 1 zusammengestellten, kontinuierlich durchgeführten Versuche diente ein mit einem schnellaufenden Rührer ausgerüsteter Autoklav von etwa 0,5 1 Volumen. Ethylen wurde über einen Kolbenkompressor, Vinylacetat, Initiatorlösung und der als Molmassenregler verwendete Propionaldehyd mit Membranpumpen in den Autoklaven eindosiert. Die Einstellung des Druckes erfolgte über das Bodenablaßventil des Autoklaven, die Einstellung der Temperatur (Manteltemperatur) durch elektrische Beheizung. Die Polymerisationsgrenztemperatur wurde durch Variation des Initiator- und des Radikalfängereinsatzes gesteuert.

Der Vinylacetatgehalt im Polymerisat wurde nach der Pyrolysemethode bestimmt. Hierzu wurden 200 mg des Polymerisats mit 300 mg reinem Polyethylen in einem Pyrolysekolben 5 Minuten auf 450°C erhitzt und die Spaltgase in einem 250 ml-Rundkolben aufgefangen. Die entstandene Essigsäure wurde mit einer NaJ/KJO$_3$-Lösung umgesetzt und das freiwerdende Jod mit Na$_2$S$_2$O$_3$-Lösunmg titriert.

Die Beispiele 1 bis 4 betreffen das erfindungsgemäße Verfahren, nämlich die Polymerisation unter Zusatz von Radikalfängern; es wurden Grenztemperaturen von 270 bis 275°C erreicht.

In Beispiel 5 ist die Polymerisation in Abwesenheit von Radikalfängern beschrieben. Die höchste erreichbare Polymerisationstemperatur, bei der noch keine Zersetzung eintrat, betrug 260°C.

Die Beispiele 1 bis 4 zeigen gegenüber Beispiel 5, daß durch Zusatz von Radikalfängern zum Reaktionsgemisch die Polymerisationsgrenztemperatur angehoben werden kann und eine Ausbeuteerhöhung zwischen 9 und 31 % erzielt wird.

In Beispiel 6 wurde ein Polymerisationsversuch bei höherer Temperatur ohne Stabilisatorzusatz durchgeführt. Unter den gegebenen Bedingungen war eine Polymerisation wegen des starken Temperaturanstiegs nicht möglich.

Tabelle 1:

| | | Beispiele | | | | | |
|---|---|---|---|---|---|---|---|
| | | 1 | 2 | 3 | 4 | 5 | 6 |
| Polymerisationsgrenztemperatur | [°C] | 275 | 270 | 270 | 270 | 260 | 270 |
| Druck | [MPa] | 150 | 150 | 150 | 150 | 150 | 150 |
| Ethylendurchsatz | [kg/h] | 8,0 | 8,0 | 8,0 | 8,0 | 8,0 | 8,0 |
| Vinylacetatdurchsatz | [kg/h] | 3,91 | 3,91 | 3,91 | 3,91 | 3,91 | 3,91 |
| Propionaldehyd | [ml/h] | 215 | 240 | 210 | 215 | 340 | 300 |
| Initiator [a] | | | | | | | |
| Art | | A | B | B | B | B | B |
| Menge [ppm, bezogen auf $C_2H_4$] | | 85 | 124 | 100 | 56 | 317 | 100 |
| Radikalfänger [b] | | | | | | | |
| Art | | C | D | E | F | – | – |
| Menge [Gew.-ppm, bezogen auf $C_2H_4$] | | 1020 | 2050 | 2050 | 410 | – | – |
| Polymeraustrag | [kg/h] | 2,81 | 2,98 | 3,10 | 3,36 | 2,60 | – |
| Vinylacetatgehalt | [Gew.-%] | 27,7 | 28,2 | 28,4 | 28,0 | 28,6 | – |
| Schmelzviskosität bei 140°C | [mPa.s] | 250 | 260 | 240 | 260 | 220 | – |
| Polymerisatausbeute | [%] | 23,3 | 24,6 | 25,6 | 27,8 | 21,3 | – |
| mittlere Molmasse $\overline{M}_n$ | [g.mol$^{-1}$] | 1950 | 2015 | 1890 | 1966 | 1853 | – |

```
a)   A ≙ tert.-Butylperoxipivalat
     B ≙ tert.-Butylperoxibenzoat

b)   C ≙ Hydrochinon
     D ≙ 4-Methoxiphenol
     E ≙ 2,6-Di-tert.-butyl-4-methylphenol
     F ≙ Mischung aus 4 Gew.-teilen Tris(2,4-di-tert.-
         butyl-4-hydroxyphenyl)phosphit und 1 Gew.-teil
         n-Octadecyl-3(3,5-di-tert.-butyl-4-hydroxy-
         phenyl)propionat
```

**Patentansprüche**

1.  Verfahren zur Herstellung von Copolymerisaten des Ethylens, durch Polymerisation mit Ethylen und Estern des Vinylalkohols, unter Ausschluß von Lösungs- und Emulgiermitteln bei Drücken von mindestens 100 MPa und Temperaturen zwischen 150 bis 350°C in Gegenwart Radikale bildender Katalysatoren und/oder Sauerstoff und eines Molmassenreglers, dadurch gekennzeichnet, daß die Polymerisation unter Zusatz von 410 - 10000 Gew.-ppm, bezogen auf das Ethylen, eines Radikalfängers erfolgt.

2.  Verfahren nach Anspruch 1, dadurch gekennzeichnet, daß man als Radikalfänger Phenole oder Phenolderivate einsetzt.

3.  Verfahren nach Anspruch 1, dadurch gekennzeichnet, daß man als Radikalfänger aromatische Amine einsetzt.

4.  Verfahren nach Anspruch 1, dadurch gekennzeichnet, daß man als Radikalfänger organische Phosphite einsetzt.

5.  Verfahren nach Anspruch 1 oder 2, dadurch gekennzeichnet, daß man als Radikalfänger Phenole oder Phenolderivate zusammen mit organischen Phosphiten einsetzt.

6.  Verfahren nach Anspruch 5, dadurch gekennzeichnet, daß man als Radikalfänger Hydrochinon, 4-Methoxyphenol, 2,6-Di-tert.-butyl-4-methylphenol oder n-Octadecyl-3-(3,5-di-tert.-butyl-4-hydroxyphenyl)propionat allein oder zusammen mit Tris(2,4-di-tert.-butylphenyl)phosphit einsetzt.

7.  Verfahren nach einem oder mehreren der Ansprüche 1 bis 6, dadurch gekennzeichnet, daß die Polymerisation bei Drücken von 150 bis 300 mPa und Temperaturen von 260 bis 310°C, insbesondere 270 bis 300°C, erfolgt.

8.  Verfahren nach einem oder mehreren der Ansprüche 1 bis 7, dadurch gekennzeichnet, daß als Comonomere des Ethylens Ester des Vinylalkohols, die insgesamt 4 bis 10 Kohlenstoffatome enthalten, eingesetzt werden.

9.  Verfahren nach einem oder mehreren der Ansprüche 1 bis 8, dadurch gekennzeichnet, daß als Molmassenregler Propionaldehyd eingesetzt wird.

**Claims**

1.  A process for the preparation of copolymers of ethylene by polymerization of ethylene with esters of vinyl alcohol in the absence of solvents and emulsifiers at pressures of at least 100 MPa and temperatures between 150 and 350°C in the presence of catalysts forming free radicals and/or oxygen and of a molecular weight regulator, which comprises carrying out the polymerization with the addition of 410 to 10,000 ppm b.w., based on ethylene, of a free radical acceptor.

2.  A process as claimed in claim 1, wherein the free radical acceptors used are phenols or phenol derivatives.

3.  A process as claimed in claim 1, wherein the free radical acceptors used are aromatic amines.

4. A process as claimed in claim 1, wherein the free radical acceptors used are organic phosphites.

5. A process as claimed in claim 1 or 2, wherein the free radical acceptors used are phenols or phenol derivatives together with organic phosphites.

6. A process as claimed in claim 5, wherein the free radical acceptor used is hydroquinone, 4-methoxyphenol, 2,6-di-tert-butyl-4-methylphenol or n-octadecyl 3-(3,5-di-tert-butyl-4-hydroxyphenyl)-propionate alone or together with tris-(2,4-di-tert-butylphenyl) phosphite.

7. A process as claimed in one or more of claims 1 to 6, wherein the polymerization is carried out at pressures of 150 to 300 MPa and temperatures of 260 to 310°C, in particular 270 to 300°C.

8. A process as claimed in one or more of claims 1 to 7, wherein esters of vinyl alcohol which contain a total of 4 to 10 carbon atoms are used as comonomers of ethylene.

9. A process as claimed in one or more of claims 1 to 8, wherein the molecular weight regulator used is propionaldehyde.

**Revendications**

1. Procédé de préparation de copolymères de l'éthylène par polymérisation de l'éthylène et d'esters de l'alcool vinylique en l'absence de solvants et d'agents émulsionnants sous des pressions d'au moins 100 mPa et à des températures de 150 à 350°C en présence de catalyseurs formant des radicaux libres et/ou d'oxygène et d'un régulateur de poids moléculaire, caractérisé en ce que la polymérisation est réalisée avec adjonction de 410-10 000 ppm en poids par rapport à l'éthylène, d'un capteur de radicaux libres.

2. Procédé selon revendication 1, caractérisé en ce que l'on utilise en tant que capteurs de radicaux libres des phénols ou dérivés de phénols.

3. Procédé selon revendication 1, caractérisé en ce que l'on utilise en tant que capteurs de radicaux libres des amines aromatiques.

4. Procédé selon revendication 1, caractérisé en ce que l'on utilise en tant que capteurs de radicaux libres des phosphites organiques.

5. Procédé selon la revendication 1 ou 2, caractérisé en ce que l'on utilise en tant que capteurs de radicaux libres des phénols ou dérivés de phénols avec des phosphites organiques.

6. Procédé selon revendication 5, caractérisé en ce que l'on utilise en tant que capteurs de radicaux libres l'hydroquinone, le 4-méthoxyphénol, le 2,6-di-tert-butyl-4-méthylphénol ou le 3-(3,5-di-tert-butyl-4-hydroxyphényl)-propionate de n-octadécyle, seuls ou avec du phosphite de tris(2,4-di-tert-butylphényle).

7. Procédé selon une ou plusieurs des revendications 1 à 6, caractérisé en ce que la polymérisation est réalisée sous des pressions de 150 à 300 mPa et à des températures de 260 à 310°C, plus spécialement de 270 à 300°C.

8. Procédé selon une ou plusieurs de revendications 1 à 7, caractérisé en ce que l'on met en oeuvre en tant que monomères de l'éthylène des esters de l'alcool vinylique contenant au total 4 à 10 atomes de carbone.

9. Procédé selon une ou plusieurs des revendications 1 à 8, caractérisé en ce que l'on utilise le propionaldéhyde en tant que régulateur de poids moléculaire.